# EUROPEAN PATENT APPLICATION

(11) **EP 1 714 924 A1**
(43) Date of publication of application: **25.10.2006**
(21) Application number: 04766990.8
(22) Date of filing: 24.08.2004
(51) Int. Cl.: B65G 69/28

(54) **METHOD FOR THE CONSTRUCTION OF LOADING DOCKS FOR THE ASSEMBLY OF LEVELLING PLATFORMS COMPRISING A TRANSPORTABLE PRE-FABRICATED PIT, AND DEVICE FOR IMPLEMENTING SAME**

(30) Priority: 13.02.2004 ES 200400344
(71) Applicant: Tornymark, S.A., 46610 Guadasuar Valencia (ES)
(72) Inventor: MONTALVA JORNET, Enrique, E-46610 GUADASUAR (Valencia) (ES); CARO IBANEZ, Francisco Javier, E-46610 GUADASUAR (Valencia) (ES)
(74) Representative: Molina Garcia, Julia
(86) International application number: PCT/ES2004/070067
(87) International publication number: WO 2005/077794

(57) **Abstract**

The invention relates to a method for the construction of loading docks for the assembly of levelling platforms comprising a transportable pre- fabricated pit, and to a device which is used to implement same. The invention can be developed with two different types of pits, namely: a standard pit or a special pit, the latter being **characterised in that** it comprises an inner cavity for housing truck loading platforms. The construction method for standard pits comprises the following steps consisting in: constructing the fill layer (1); anchoring the platform/pit assembly; and filling same with building material until the surface of the platform corresponds to the sill height. The construction method for the special pits comprises the following steps consisting in: positioning a pit base structure comprising an inner opening for housing vehicle platforms; connecting the platform/pit assembly to the base structure; and filling same with building material s until the surface of the platform corresponds to the sill level.

## Description

### Object of the invention

The object referred to by the invention protected in this patent consists of a "Process for constructing loading docks for the assembly of leveler ramps with a transportable premanufactured pit and device for its implementation".

"Loading dock" refers herein to the areas provided for logistic loading and unloading operations of goods in premises requiring said operations.

"Leveler ramps" refers herein to the manually or hydraulically operated devices used in loading docks for the purpose of compensating the difference of level occurring between the vehicle object of the loading or unloading operation and the dock itself.

In view of that provided in Article 8b) of the "Regulation for Implementing the Patent Law", this application comprises independent claims for the process and for the device especially conceived for its implementation because both "correspond to the unity of the invention set forth in Article 24 of the Law and are consistent with that expressed in the title of the invention".

### Background of the Invention

Leveler ramps are mechanical devices that require the construction of a pit or cavity in the floor of the dock for their installation. The pit allows the encasement of the ramp, ensuring that the upper surface thereof is completely level with the surface of the floor of the premises where it is installed.

In the case of electro-hydraulic ramps, the pit is provided with the corresponding electrical power supply ducting from the operating switchboard, usually located in the lower part of the rack of the ramp, to the hydraulic group.

There are two known types of pits: the first one is the conventional pit and consists of a simple cavity made in the floor where the leveler ramp is encased. The second is especially conceived for housing the same leveler ramps but once these are installed, another cavity is opened under them. This space is reserved so that those vehicles for transporting goods having auto-platforms in their rear part can introduce the latter in the cavity described previously and be loaded from the loading dock. This type of pit shall be called special pit.

The construction of these pits is generally carried out with conventional masonry and construction techniques according to the specification of the manufacturer of leveler ramps and with the supply by the latter of metallic frames anchoring the concrete. This process implies a high over-cost with respect to the construction of a completely planar floor. Furthermore, the construction of these pits entails a delay in the construction stages subsequent to the floor stage and therefore more time is invested for completing the work.

Once the pit is finished, the ramp installer locates and installs the ramps.

### Description of the Invention

The purpose of the invention forming the object of this patent consists of the conception of a process for constructing loading docks for leveler ramps which allows dispensing with the conventional stage of pit construction, as well as the design of a premanufactured pit especially conceived for the implementation of said process. This new process provides the advantages of substantially reducing the times of the pit construction stage, providing greater simplicity to such stage, limiting the amount of human and mechanical resources and entailing a reduction of the times for ramp assembly in situ. '

These advantages provide a reduction of direct costs for construction companies and for manufacturers and installers of leveler ramps.

In order to facilitate the description of the new transportable premanufactured pit object of the invention as well as the comprehension of the construction process, the latter has been divided into several stages which are described separately below. As described previously, the process will be carried out using one variant or another depending on the type of pit, conventional or special.

The process for constructing conventional loading docks can be divided into the following stages:
Stage 1.1. In this first stage, a filler layer with a completely planar and leveled surface is constructed at the suitable level with respect to the circulation surface of the vehicles object of the loading and unloading operations.
Stage 1.2. The manufacturer of the leveler ramp supplies it assembled on a premanufactured pit. This premanufactured pit object of the invention fulfills both the functions of rack of the leveler ramp and of metallic reinforcement frame necessary in pit construction by conventional means. The pit can be premanufactured as a piece independent of the platform or as a rack thereof and it has grips contributing to the joining and grip between the material provided in the subsequent stages and the ramp-pit assembly, being able to be handled by conventional lifting means.

The premanufactured pit has ducting for connecting the ramp to the power supply, such that the assembly is supplied completely installed, leveled and tested in the factory.

It is likewise provided with resistant and suitably reinforced sides preventing the material provided in the finishing stage of the loading dock from being able to damage the electro-hydraulic systems located inside the ramp-pit assembly.

Once supplied, the ramp-pit assembly is leveled and fixed to the floor of Stage 1.1 using standard anchoring systems.

The stops protecting the ramp against the impacts of vehicles for transporting goods in dock-approaching operations can also be assembled in the factory. This allows delivering the completely finished product and installing it in shorter times.

Stage 1.3. Once the premanufactured pit and leveler ramp assembly has been fixed in its definite location, the control panel is located in the place from where it is desired to operate the ramp during the usual working thereof. This allows installing the ramp in a very short time period.

Stage 1.4. The leveler ramp is covered with a protective cover with the aim of protecting the elements integrating it. This operation can be optionally carried out in the factory, before supplying it to the work site.

Stage 1.5. Finally, after the assembly is installed on the support layer, the cavity is filled with material to finish the floor with filler materials and concrete until achieving that the upper surface of the leveler ramp coincides with the level of the floor of the upper layer.

The manufacturer of leveler ramps can use premanufactured pits with functions as a rack of the ramp or premanufactured pits independent of the leveler ramp. Whichever is the option chosen, the premanufactured pit requires openings in both sides for the electrical ducting, which can be installed in the factory or only with the openings in order to carry out said ducting in the work site.

The process for constructing special loading docks described below has been carried out with the option of the premanufactured pit independent of the ramp, although any of the two options (this one or with the pit as a rack of the ramp) can be used without distinction in any of the two variants of the process.

The outer appearance of the ramp-pit assembly with an independent pit or a pit with the function of a rack is similar and the decision to use one system or the other corresponds to economic criteria based on the type of work.

The process for constructing special loading docks can be divided into the following stages:
Stage 2.1. In order to allow housing vehicle platforms, a structure serving as a base for placing the premanufactured pit and having a lower opening for introducing said platforms is placed and secured.
Stage 2.2. In the case of using a premanufactured pit independent of the ramp, the ramp manufacturer installs it in the pit and assembles the anti-collision rubber stops and the grips for anchoring the assembly to the filler material of the finishing stage of the dock.

Once the ramp-pit assembly completely finished in the factory is supplied, it is coupled to the support structure mentioned in the previous stage.

The premanufactured pit intended for special loading docks has transverse openings in the form of a channel in its lower part for the coupling with the support structure.

The support structure is equipped with anchoring grips which ensure the locking between the entire assembly and the fill material in the finishing of the dock.

Stage 2.3. Once the premanufactured pit and leveler ramp assembly has been fixed in its definite location, the control panel is placed in the location from where it is desired to operate the ramp during the usual working thereof. This allows installing the ramp in a very short time period.

Stage 2.4. The leveler ramp is covered with a protective cover with the aim of protecting the elements integrating it. This operation can be optionally carried out in the factory, before supplying it to the work site.

Stage 2.5. Finally, after the assembly is installed, the cavity is filled with material to finish the floor, with filler materials and concrete until achieving that the upper surface of the leveler ramp coincides with the level of the floor.

### Brief Description of the Drawings

In order to complement the description of the invention and facilitate the interpretation of the formal, structural and functional features of its object, drawings are attached which schematically show different aspects of a preferred embodiment of the "Process for constructing loading docks for the assembly of leveler ramps with a transportable premanufactured pit and device for its implementation" forming the object of this patent. In said drawings.

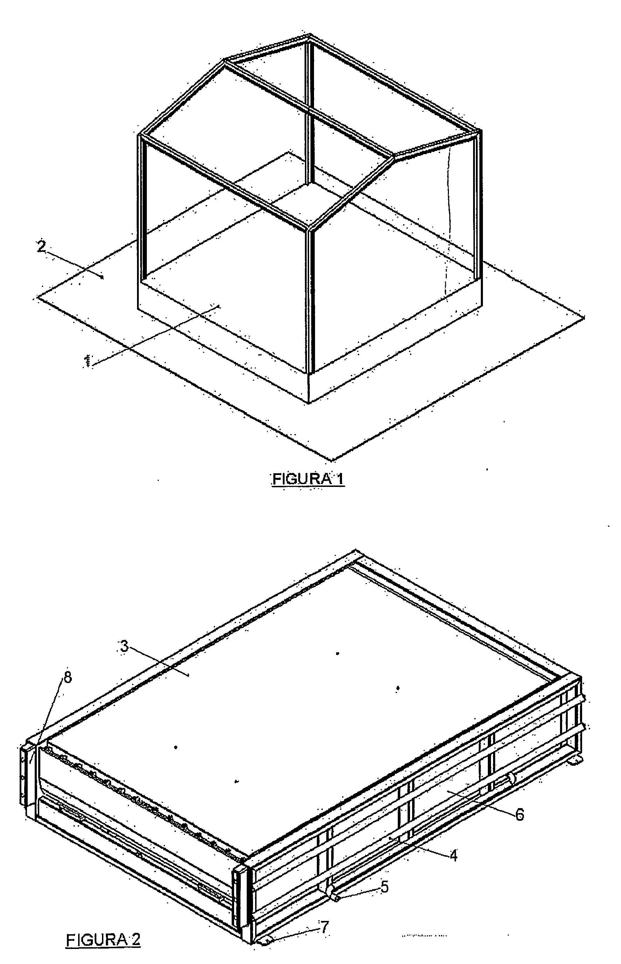

Figure 1 shows an isometric view of Stage 1.1 for constructing a first support layer over the running surface of vehicles for transporting goods when the loading dock is conventional.

Figure 2 shows an isometric view of the ramp-pit assembly using metallic materials for the premanufactured pit. In this figure, the premanufactured pit has a double function as a pit and a rack of the ramp.

Figure 3 shows an isometric view of Stage 1.2 in which the premanufactured ramp-pit assembly is located over the first level of the floor constructed in Stage 1.1.

Figure 4 shows an isometric view of Stage 1.3 in which the control panel is placed in the final location from where the leveler ramp is operated.

Figure 5 shows a sectional view of the ramp-premanufactured pit assembly, assembled on the first layer of the support floor and showing the placing of a protective cover of the assembly according to Stage 1.4.

Figure 6 shows an isometric view of Stage 1.5 in which the cavity is filled and the floor is finished.

Figure 7 shows an isometric view of a premanufactured pit model with the option of a pit independent of the leveler ramp, made of premanufactured concrete materials or with composite materials, equipped with lower cavities intended for the coupling for special loading docks.

Figure 8 shows an isometric view of the shape of the previous structure for special pits as described in Stage 2.1 for this type of pit.

Figure 9 shows an exploded view of the embodiment of a leveler ramp assembly on a premanufactured pit. The assembly of the anchoring grips on the rear filler material and of the anti-collision rubber stops can also be observed.

Figure 10 shows an isometric view of the ramp-pit assembly assembled as supplied to the work site for assembly.

Figure 11 shows an isometric view of the ralmp-pit assembly on the structure depicted in the previous figure for special docks.

Figure 12 shows an isometric view of the ramp-pit assembly before the filling and finishing of the floor of a special dock.

Figure 13 shows an isometric view of the finishing of the special dock with a lower opening for the introduction of platforms assembled on the vehicles themselves object of the loading and unloading operations. In this figure, the electrical connection and ramp protection stage prior to the filling has been omitted since it has been depicted in the previous figures.

### Description of a Preferred Embodiment

In order to clearly show the nature and scope of the advantageous application of the "Process for constructing loading docks for the assembly of leveler ramps with a transportable premanufactured pit and device for its implementation" forming the object of the claimed invention, the stages and operations composing the process and their sequence are described below with reference to the drawings which, since they represent a preferred embodiment of said object with an informative character, must be considered in their broadest sense and not as limitating of the application and content of the claimed invention.

In order to facilitate the description of the new transportable premanufactured pit object of the invention as well as the comprehension of the construction process, the latter has been divided into several stages which are described separately below. As described previously, the process will be carried out using one variant or another depending on the type of pit, conventional or special.

The process for constructing conventional loading docks can be divided into the following stages:
Stage 1.1. In this first stage, a filler layer (1) with a completely planar and leveled surface is constructed at the suitable level with respect to the circulation surface of the vehicles (2) object of the loading and unloading operations.
Stage 1.2. The manufacturer of the leveler ramp (3) supplies it assembled on a premanufactured pit. This premanufactured pit object of the invention fulfills both the functions of a rack of the leveler ramp and of a metallic reinforcement frame necessary in pit construction by conventional means. The pit can be premanufactured as a piece independent of the platform or as a rack thereof and it has grips (4) contributing to the joining and grip between the material provided in the subsequent stages and the ramp-pit assembly, being able to be handled by conventional lifting means.

The premanufactured pit has ducting (5) for connecting the ramp to the power supply, such that the assembly is supplied completely installed, leveled and tested in the factory.

It is likewise provided with resistant and suitably reinforced sides (6) preventing the material provided in the finishing stage of the loading dock from being able to damage the electro-hydraulic systems located inside the ramp-pit assembly.

Once supplied, the ramp-pit assembly is leveled and fixed to the floor of Stage 1.1 using standard anchoring systems (7).

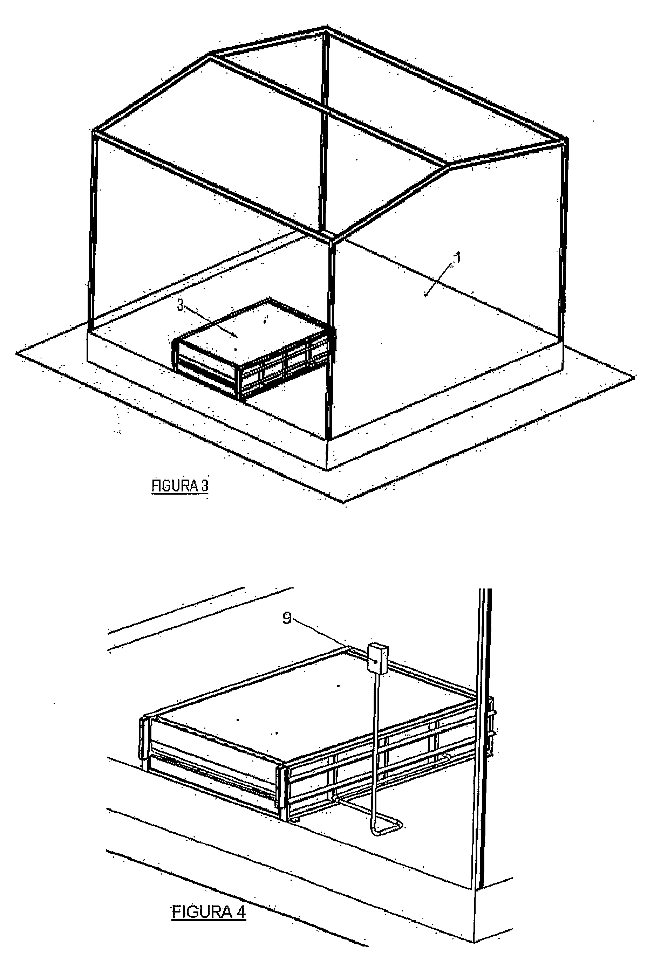

The stops (8) protecting the ramp against the impacts of vehicles for transporting goods in dock-approaching operations can also be assembled in the factory (see Figures 2 and 3). This allows delivering the completely finished product and installing it in more reduced times.

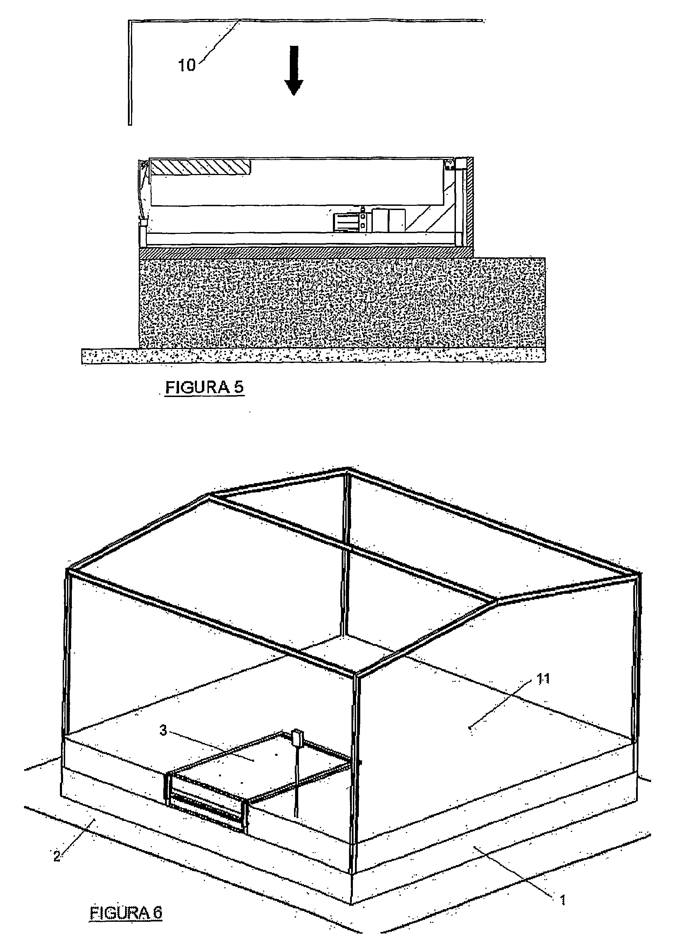

Stage 1.3. Once the premanufactured pit and leveler ramp (3) assembly has been fixed in its final location, the control panel (9) is placed in the location from where it is desired to operate the ramp during the usual Working thereof (see Figure 4). This allows installing the ramp in a very short time period.

Stage 1.4. The leveler ramp is covered with a protective cover (10) with the aim of protecting the elements integrating it. This operation can be optionally carried out in the factory, before supplying it to the work site (see Figure 5).

Stage 1.5. Finally, after the assembly is installed on the support layer (1), the cavity is filled with material to finish the floor with filler materials and concrete until achieving that the upper surface of the leveler ramp coincides with the level of the floor of the upper layer (11) (see Figure 6).

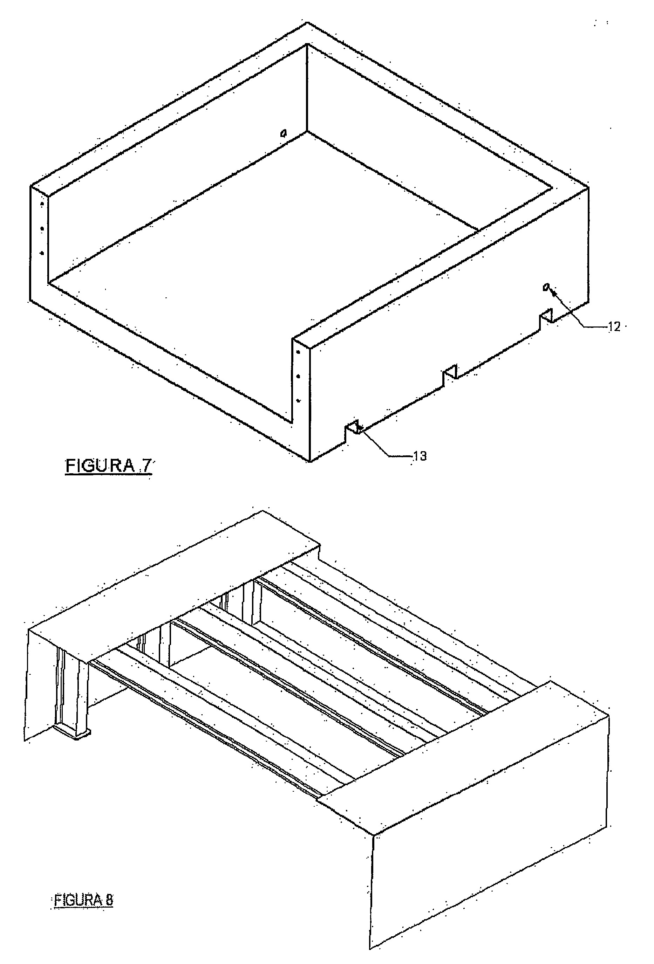

The manufacturer of leveler ramps can use premanufactured pits with functions as a rack of the ramp or as a premanufactured pit independent of the leveler ramp. Whichever is the option chosen, the premanufactured pit requires openings (12) in both sides for the electrical ducting, which can be installed in the factory or only with the openings (12) in order to carry out said ducting in the work site (see Figure 7).

The process for constructing special loading docks described below has been carried out with the option of the premanufactured pit independent of the ramp, although any of the two options (this one or with the pit as a rack of the ramp) can be used without distinction in any of the two variants of the process.

The outer appearance of the ramp-pit assembly with an independent pit or a pit with the function of a rack is similar and the decision to use one system or the other corresponds to economic criteria based on the type of work.

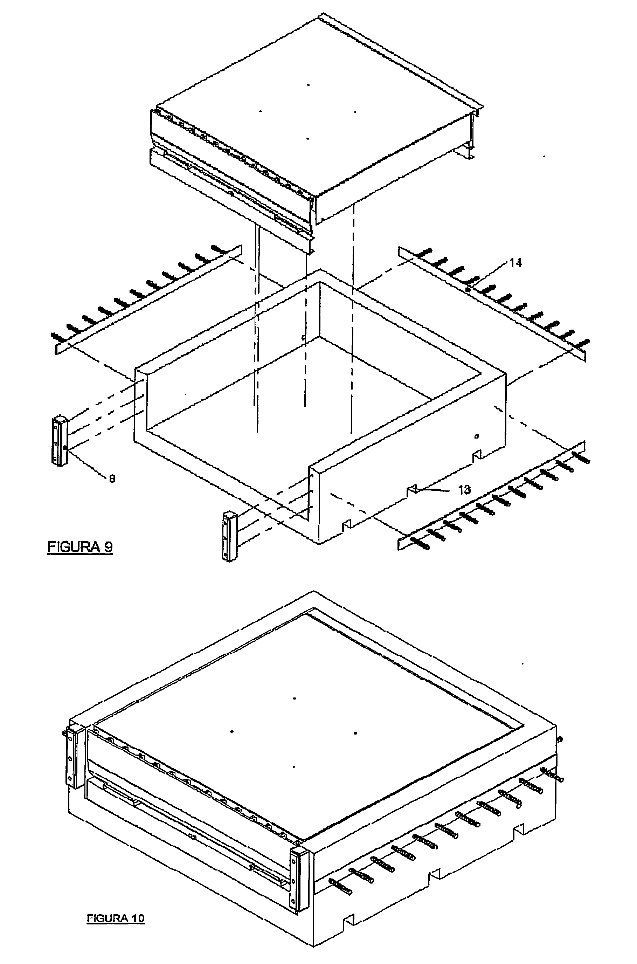

The process for constructing special loading docks can be divided into the following stages:
Stage 2.1. In order to allow housing vehicle platforms, a structure serving as a base for placing the premanufactured pit and having a lower opening for introducing said platforms is placed and secured (see Figure 8).
Stage 2.2. In the case of using a premanufactured pit independent of the ramp, the ramp manufacturer installs it in the pit and assembles the anti-collision rubber stops and the grips for anchoring the assembly to the filler material of the finishing stage of the dock (see figures 9 and 10).

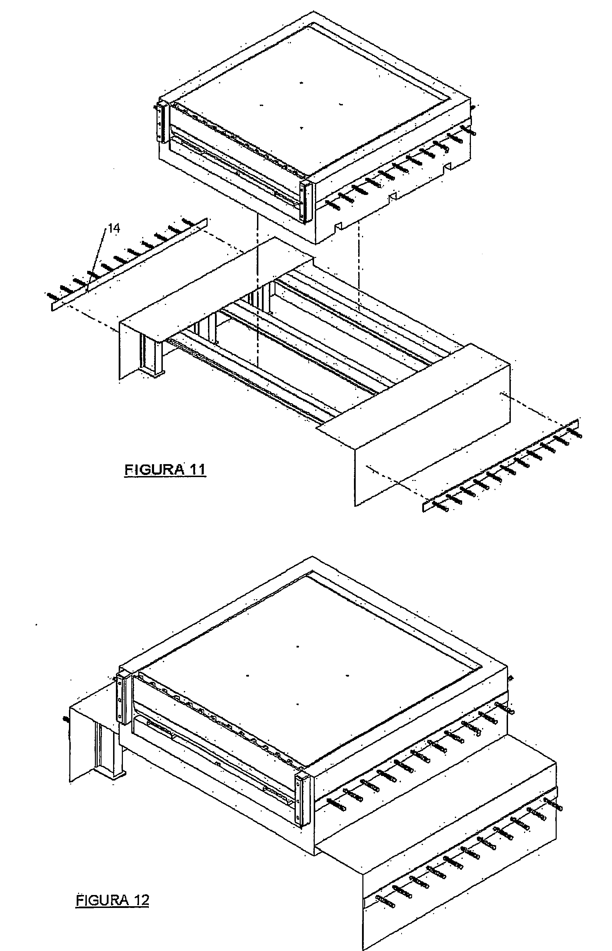

Once the ramp-pit assembly completely finished in the factory is supplied, it is coupled to the support structure mentioned in the previous stage (see Figures 11 and 12).

The premanufactured pit intended for special loading docks has transverse openings (13) in the form of a channel in its lower part for the coupling with the support structure (see Figures 7, 9 and 11).

The support structure is equipped with anchoring grips (14) which guarantee the locking between the entire assembly and the filler material in the finishing of the dock (see figures 11 and 12).

Stage 2.3. Once the premanufactured pit and leveler ramp assembly has been fixed in its definite location, the control panel (9) is placed in the location from where it is desired to operate the ramp during the usual working thereof. This allows installing the ramp in a very short time period.

Stage 2.4. The leveler ramp is covered with a protective cover (10) with the aim of protecting the elements integrating it. This operation can be optionally carried out in the factory before supplying it to the work site (see Figure 5).

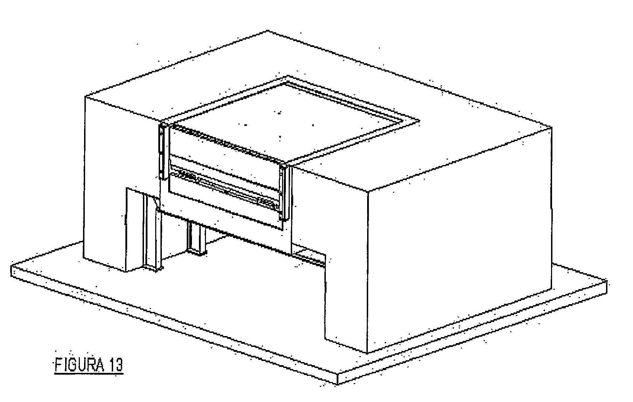

Stage 2.5. Finally, after the assembly is installed, the cavity is filled with material to finish the floor, with filler materials and concrete until achieving that the upper surface of the leveler ramp coincides with the level of the floor (see Figure 13).

## Claims

1. A process for constructing loading docks for the assembly of leveler ramps with a transportable premanufactured pit, **characterized in that** it is divided into two variants: the first one contemplates the construction of conventional loading docks and the second one contemplates those special ones requiring a cavity in their lower part with the purpose of internally placing the loading platforms installed in the rear part of some vehicles for transporting goods.

2. A process for constructing loading docks for the assembly of leveler ramps with a transportable premanufactured pit according to claim 1, **characterized in that** the operative process in the case of conventional loading docks can be divided into different stages with the following sequence and content: Stage 1.1.- Creating a support layer of the premanufactured pit for loading docks; Stage 1.2.- Placing the premanufactured pits with the leveler ramps; Stage 1.3.- Electrical connection; Stage 1.4.- Protecting the assembly prior to filling with concrete, Stage 1.5.- Finishing the loading dock.

3. A process for constructing conventional loading docks according to claim 2, **characterized in that** it comprises the construction of a filler layer (1) with a completely planar surface and leveled at the suitable level with respect to the circulation surface of the vehicles (2) object of the loading and unloading operations (see Figure 1).

4. A process for constructing conventional loading docks according to claim 2, **characterized in that** the manufacturer of the leveler ramp (3) supplies the ramp assembled on a premanufactured pit Once supplied the ramp-pit assembly is leveled and fixed to the floor of Stage 1.1 using standard anchoring systems (7).

5. A device for the implementation of the process for constructing loading docks for the assembly of leveler ramps with a transportable premanufactured pit according to claim 1, **characterized in that** it fulfills both the functions of a rack of the leveler ramp and of a metallic reinforcement frame necessary in pit construction by conventional means. The pit can be premanufactured as a piece independent of the platform or as a rack thereof and it has grips (4) contributing to the joining and grip between the material provided in the subsequent stages and the ramp-pit assembly, being able to be handled by conventional lifting means.
The premanufactured pit has ducting (5) for connecting the ramp to the power supply, such that the assembly is supplied completely installed, leveled and tested in the factory.
It is likewise provided with resistant and suitably reinforced sides (6) preventing the material provided in the finishing stage of the loading dock from being able to damage the electro-hydraulic systems located inside the ramp-pit assembly.
The stops (8) protecting the ramp against the impacts of vehicles for transporting goods in dock-approaching operations can also be assembled in the factory (see Figures 2 and 3).

6. A process for constructing conventional loading docks according to claim 2, **characterized in that** once the premanufactured pit and leveler ramp (3) assembly has been fixed in its final location, the control panel (9) is placed in the location from where it is desired to operate the ramp during the usual working thereof (see Figure 4).

7. A process for constructing conventional loading docks according to claim 2, **characterized in that** the leveler ramp is covered with a protective cover (10) with the aim of protecting the elements integrating it. This operation can be optionally carried out in the factory, before supplying it to the work site (see Figure 5).

8. A process for constructing conventional loading docks according to claim 2, **characterized in that** after the assembly is installed on the support layer (1), the cavity is filled with material to finish the floor with filler materials and concrete until achieving that the upper surface of the leveler ramp coincides with the level of the floor of the upper layer (11) (See Figure 6).

9. A process for constructing loading docks for the assembly of leveler ramps with a transportable premanufactured pit according to claim 1, **characterized in that** the operative process in the case of special loading docks can be divided into different stages with the following sequence and content: Stage 2.1.- Placing a support structure for supporting the premanufactured pit; Stage 2.2.- Placing the premanufactured pits on the previous structure; Stage 2.3.- Electrical connection; Stage 2.4.- Protecting the assembly prior to filling with concrete; Stage 2.5.- Finishing the loading dock.

10. A process for constructing special loading docks according to claim 9, **characterized in that** in order to allow housing vehicle platforms, a structure serving as a base for placing the premanufactured pit and having a lower opening for introducing said platforms is placed and secured (see Figure 8).

11. A device for the implementation of the process for constructing loading docks for the assembly of leveler ramps with a transportable premanufactured pit according to claim 1, **characterized in that** the pit intended for special loading docks has transverse openings (13) in the form of a channel in its lower part for the coupling with the support structure (see Figures 7, 9 and 11)..

12. A process for constructing loading docks for the assembly of leveler ramps with a transportable premanufactured pit according to claim 1, **characterized in that** in the case of using a premanufactured pit independent of the ramp, the ramp manufacturer installs it in the pit and assembles the anti-collision rubber stops and the grips for anchoring the assembly to the filler material of the finishing stage of the dock (see figures 9 and 10).

13. A process for constructing special loading docks according to claim 9, **characterized in that** once the ramp-pit assembly completely finished in the factory is supplied, it is coupled to the support structure mentioned in the previous stage (see Figures 11 and 12).
The support structure is equipped with anchoring grips (14) which guarantee the locking between the entire assembly and the filler material in the finishing of the dock (See figures 11 and 12).

14. A process for constructing special loading docks according to claim 9, **characterized in that** once the premanufactured pit and leveler ramp (3) assembly has been fixed in its final location, the control panel (9) is placed in the location from where it is desired to operate the ramp during the usual working thereof (see Figure 4).

15. A process for constructing special loading docks according to claim 9, **characterized in that** the leveler ramp is covered with a protective cover (10) with the aim of protecting the elements integrating it. This operation can be optionally carried out in the factory, before supplying it to the work site (see Figure 5).

16. A process for constructing special loading docks according to claim 9, **characterized in that** finally, after the assembly is installed, the cavity is filled with material to finish the floor, with filler materials and concrete until achieving that the upper surface of the leveler ramp coincides with the level of the floor (see Figure 13).
